# EUROPÄISCHE PATENTSCHRIFT

(11) **EP 4 469 990 B1**
(45) Veröffentlichungstag und Bekanntmachung des Hinweises auf die Patenterteilung: **14.10.2026**
(21) Anmeldenummer: 22830741.9
(22) Anmeldetag: 06.12.2022
(51) Int. Cl.: G08G 1/16, G08G 1/01, B60W 40/04, G08G 1/0967, H04W 4/44, G08G 1/00, B60W 30/18

(54) **VERFAHREN ZUR PLANUNG EINES SPURWECHSELMANÖVERS FÜR EIN AUTOMATISIERT FAHRENDES FAHRZEUG**
METHOD FOR PLANNING A LANE-CHANGE MANEUVER FOR AN AUTOMATED VEHICLE
PROCÉDÉ DE PLANIFICATION D'UNE MANOEUVRE DE CHANGEMENT DE VOIE POUR UN VÉHICULE AUTOMATISÉ

(30) Priorität: 24.01.2022 DE 102022000231
(43) Veröffentlichungstag der Anmeldung: 04.12.2024
(73) Patentinhaber: Mercedes-Benz Group AG, 70372 Stuttgart (DE)
(72) Erfinder: PACZIA, Jonas, 70565 Stuttgart (DE); REHBORN, Hubert, 71069 Sindelfingen (DE)
(74) Vertreter: Novagraaf Group
(86) Internationale Anmeldenummer: PCT/EP2022/084571
(87) Internationale Veröffentlichungsnummer: WO 2023/138827

(56) Entgegenhaltungen:
- DE-A1- 102014 000 843
- DE-A1- 102018 200 937
- DE-A1- 102018 211 236
- DE-B4- 102016 122 686

## Beschreibung

Die Erfindung betrifft ein Verfahren zur Planung eines Spurwechselmanövers von einer Fahrspur auf eine äußere Fahrspur zur Vorbereitung auf ein bevorstehendes Abfahren von einem mehrspurigen Fahrbahnabschnitt für ein automatisiert fahrendes Fahrzeug, wobei das Fahrzeug datentechnisch mit einer zentralen Rechnereinheit gekoppelt oder koppelbar ist.

Aus der DE 10 2019 005 446 B3 ist ein Verfahren zum automatisierten Einfädeln eines Fahrzeuges von einer Einfädelspur auf eine Fahrspur bekannt. Das Verfahren sieht vor, dass eine primäre Einfädelposition vorbestimmt wird, an welcher das Fahrzeug einen Spurwechsel von der Einfädelspur auf die Fahrspur vornehmen soll. Wenn der Spurwechsel an oder nahe an der primären Einfädelposition zu keiner Behinderung von sich auf der Fahrspur befindlichen Verkehrsteilnehmern führt, wird das Fahrzeug derart gesteuert, dass der Spurwechsel an der primären Einfädelposition durchgeführt wird. Andernfalls wird der Spurwechsel an einer sekundären Einfädelposition durchgeführt, die in Abhängigkeit von detektierten Freiräumen zwischen auf der Fahrspur befindlichen Verkehrsteilnehmern bestimmt wird.

Darüber hinaus beschreibt die DE 10 2017 221 104 A1 ein Verfahren zum Koordinieren mindestens eines Abstandes zwischen mindestens zwei autonomen oder teilautonomen Fahrzeugen in einem Fahrzeugverbund, wobei mindestens eine Auffahrt und/oder Abfahrt einer von den mindestens zwei Fahrzeugen befahrenen Straße in einem Bereich vor dem Fahrzeugverbund registriert wird, ein situationsabhängig optimaler Abstand bei einem Passieren der Auffahrt und/oder Abfahrt zwischen den mindestens zwei Fahrzeugen ermittelt wird, eine Distanz zwischen den mindestens zwei Fahrzeugen auf den situationsabhängigen optimalen Abstand zwischen den mindestens zwei Fahrzeugen vor dem Erreichen der Auffahrt und/oder Abfahrt angepasst wird, die Auffahrt und/oder Abfahrt mit dem ermittelten situationsabhängig optimalen Abstand zwischen den mindestens zwei Fahrzeugen passiert wird, ein situationsabhängig optimaler Abstand zwischen den mindestens zwei Fahrzeugen nach dem Passieren der Auffahrt und/oder Abfahrt erneut ermittelt wird und die Distanz zwischen den mindestens zwei Fahrzeugen auf den erneut ermittelten situationsabhängig optimalen Abstand zwischen den mindestens zwei Fahrzeugen nach dem Passieren der Auffahrt und/oder Abfahrt angepasst wird .

Die DE 10 2014 000 843 A1 beschreibt ein Verfahren zur Durchführung eines Fahrspurwechsels von einem auf einer Ist-Spur autonom fahrenden Fahrzeug auf eine benachbarte Ziel-Spur. Hierbei initialisiert das autonom fahrende Fahrzeug auf Basis einer vorgegebenen Route oder einer aktuellen Verkehrssituation selbsttätig einen Fahrspurwechsel. Nach erfolgter Initialisierung wird auf Basis von Orts- und Bewegungsdaten des auf der Ist-Spur als auch der auf der Ziel-Spur fahrenden Fahrzeugen ein Vorliegen einer für den Fahrspurwechsel adäquaten Verkehrslücke ermittelt. Sofern das Vorliegen einer adäquaten Verkehrslücke auf der Ziel-Spur erkannt wird, wird der Fahrspurwechsel von dem Fahrzeug autonom ausgeführt.

Aus der DE 10 2016 122 686 B4 ist ein Verfahren zum Informieren eines Verkehrsteilnehmers über eine Verkehrssituation bekannt, wobei ein Funksignal von einem ersten Fahrzeug empfangen wird, wobei ein zweites Fahrzeug das eine Verkehrssituation abbildendes Funksignal aussendet. Die Verkehrssituation umfasst beispielsweise die aktuelle Position, aktuelle Geschwindigkeit des zweiten Fahrzeugs oder eine Verwendung von Fahrwegen, das Ausfahren aus einer Einfahrt/ Ausfahrt, das Abfahren von einer Schnellstraße, sowie das Wechseln einer Spur auf einem mehrspurigen Fahrweg.

Die DE 10 2018 211 236 A1 offenbart ein Verfahren zum Betreiben einer automatisierten Fahrzeugkolonne, bei dem ein außerhalb der Fahrzeugkolonne fahrendes Spurwechselfahrzeug erfasst wird, die automatisierte Fahrzeugkolonne an einer für ein einscherendes Spurwechselfahrzeug optimierten Position aufgelöst und ein Einscheren des Spurwechselfahrzeug an der optimierten Position in die automatisierte Fahrzeugkolonne bewirkt wird. Die Steuerung der automatisierten Fahrzeugkolonne wird dabei wenigstens teilweise aus der Cloud durchgeführt. Die optimierte Position der Aufsplittung der automatisierten Fahrzeugkolonne entspricht dabei einem Schnittpunkt einer geplanten Trajektorie des Spurwechselfahrzeugs mit einer kombinierten Trajektorie aller Fahrzeug der Fahrzeugkolonne.

Der Erfindung liegt die Aufgabe zugrunde, ein Verfahren zur Planung eines Spurwechselmanövers für ein automatisiert fahrendes Fahrzeug anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Planung eines Spurwechselmanövers von einer Fahrspur auf eine äußere Fahrspur zur Vorbereitung auf ein bevorstehendes Abfahren von einem mehrspurigen Fahrbahnabschnitt für ein automatisiert fahrendes Fahrzeug, wobei das Fahrzeug datentechnisch mit einer zentralen Rechnereinheit gekoppelt oder koppelbar ist, sieht erfindungsgemäß vor, dass mittels der zentralen Rechnereinheit ein lokales Verkehrsaufkommen auf dem mehrspurigen Fahrbahnabschnitt repräsentierende Verkehrsdaten empfangen werden. Zusätzlich werden mittels der zentralen Rechnereinheit von automatisiert fahrenden weiteren Fahrzeugen der Fahrzeugflotte Spurwechseldaten über geplante und erfolgte automatisierte Spurwechselmanöver empfangen und mittels der zentralen Rechnereinheit wird anhand empfangener Verkehrsdaten und empfangener Spurwechseldaten eine Wahrscheinlichkeit ermittelt, dass eine Durchführung eines automatisierten Spurwechselmanövers des Fahrzeuges an einer bestimmten Position bei einem momentanen Verkehrsaufkommen möglich ist.

Dabei ist bei Rechtsverkehr unter äußerer Fahrspur eine rechte Fahrspur und bei Linksverkehr eine linke Fahrspur, insbesondere einer Autobahn, zu verstehen.

Durch Anwendung des Verfahrens wird also eine Position bestimmt, an welcher das automatisiert fahrende Fahrzeug ein Spurwechselmanöver einleitet, um auf die äußere Fahrspur zu wechseln, so dass ein Abfahren von der Autobahn unter Einhaltung gesetzlicher Vorgaben und technischer Randbedingungen möglich ist.

Mittels des Verfahrens kann ein Verkehrsablauf verbessert werden, da automatisiert fahrende Fahrzeuge durch das Verfahren rechtzeitig ein Spurwechselmanöver zum Abfahren von der jeweiligen Autobahn durchführen. Dadurch ist es nicht erforderlich, dass das jeweilige automatisiert fahrende Fahrzeug eine vergleichsweise kurze Zeitlücke wahrnehmen muss oder veranlasst wird, dass Fahrzeug durch einen Insassen, d. h. einen Fahrer, manuell zu betreiben, um die Ausfahrt der Autobahn noch rechtzeitig zu erreichen. Wird das Verfahren angewendet, können eine Verkehrssicherheit und ein Fahrkomfort erhöht werden.

Im Vergleich zu einem auf einer Fahrzeug-zu-Fahrzeugkommunikation basierenden Lösungsansatz ist das erfindungsgemäße Verfahren im Wesentlichen unabhängig von einem Verhalten anderer Verkehrsteilnehmer. Somit kann sowohl eine technische Komplexität als auch eine Kooperationsabhängigkeit von anderen Fahrzeugherstellern und/oder Verkehrsteilnehmern verringert werden.

Insbesondere kann für automatisiert fahrende Fahrzeuge durch Anwendung des Verfahrens ein Verlassen einer Autobahn an einer Ausfahrt, z.B. durch ein frühzeitiges Einscheren auf die äußere Fahrspur besser ermöglicht werden. Diese vergleichsweise frühzeitigen Einscherpositionen auf die äußere Fahrspur können beispielsweise aus Fahrzeugflotten automatisiert fahrender Fahrzeuge, die erfolgreich ohne Fahrereingriff eine Autobahn über eine Ausfahrt verlassen haben, festgelegt werden. Darüber hinaus kann aus einer Fahrzeugflotte eine Position ermittelt werden, an welcher üblicherweise ein menschliche Fahrer auf die äußere Fahrspur wechselt, um an einer Ausfahrt von der Autobahn abzufahren. Aus den technischen Randbedingungen automatisiert fahrender Fahrzeuge kann eine Position zur Einleitung des Spurwechselmanövers der automatisierten Fahrzeuge dann auch in einer parametrisierbaren größeren Entfernung von z.B. 300 m vor der Ausfahrt festgelegt werden.

Mit anderen Worten dient das Verfahren dazu, dass anhand einer räumlich-zeitlichen Untersuchung von Spurwechselmanövern vernetzter, automatisiert fahrender weiterer Fahrzeuge an Ausfahrten von Autobahnen mittels eines Service der zentralen Rechnereinheit ein Risiko für ein Verpassen einer Ausfahrt erheblich reduziert und eine Sicherheit sowie ein Fahrkomfort bei dem Spurwechselmanöver erhöht werden. Anhand der Spurwechseldaten und der Verkehrsdaten kann ein Zeitpunkt für ein Spurwechselmanöver dynamisch bestimmt werden.

Die von den automatisiert fahrenden weiteren Fahrzeugen der Fahrzeugflotte an die zentrale Rechnereinheit übermittelten Spurwechseldaten enthalten Spurwechselortsinformationen und Spurwechselerfolgsinformationen, die von den automatisiert fahrenden weiteren Fahrzeugen der Fahrzeugflotte an die zentrale Rechnereinheit übermittelt werden. Somit enthalten die Spurwechseldaten der weiteren Fahrzeuge ausreichend Informationen, um die für das automatisiert fahrende Fahrzeug geeignete Position zur Einleitung des Spurwechselmanövers, so dass das Fahrzeug weitestgehend gefahrlos die nächste Ausfahrt nutzen kann, zu ermitteln. Insbesondere wird die Position anhand der vorliegenden Spurwechseldaten derart gewählt, dass das Spurwechselmanöver nicht abrupt, sondern einer Verkehrssituation angepasst, allmählich eingeleitet wird, so dass ein Fahrkomfort für Insassen des Fahrzeuges vor und während des Spurwechselmanövers nicht beeinträchtigt wird.

Das Verfahren sieht vor, dass mittels der Spurwechselortsinformationen ein Ort angegeben wird, an welchem das Spurwechselmanöver des jeweiligen automatisiert fahrenden weiteren Fahrzeuges der Fahrzeugflotte eingeleitet wurde. Die Spurwechseldaten enthalten also Informationen darüber, wo genau das jeweilige automatisiert fahrende weitere Fahrzeug sein Spurwechselmanöver eingeleitet hat, um von seiner momentanen Fahrspur auf die äußere Fahrspur zu wechseln.

Mittels der Spurwechselerfolgsinformationen wird angegeben, ob das Spurwechselmanöver des jeweiligen automatisiert fahrenden weiteren Fahrzeuges der Fahrzeugflotte erfolgreich durchgeführt wurde oder vorzeitig abgebrochen werden musste, beispielsweise da eine Übernahmeaufforderung in Bezug auf eine Fahraufgabe des Fahrzeuges an einen Fahrer ausgegeben wurde. Anhand einer ermittelten räumlichen Verteilung erfolgreich durchgeführter Spurwechselmanöver kann eine Position, insbesondere eine satellitengestützt erfasste Position für einen Beginn, also die Einleitung, des Spurwechselmanövers bestimmt werden. Insbesondere wird die Position bestimmt, an welcher mit einer parametrierbaren Wahrscheinlichkeit das automatisierte Spurwechselmanöver vor einer Ausfahrt der Autobahn erfolgreich durchgeführt werden kann.

In einer weiteren Ausführung des Verfahrens wird die Einleitung eines Spurwechselmanövers anhand eines Setzens eines Fahrtrichtungsanzeigers des automatisiert fahrenden Fahrzeuges erkannt. Dabei dient das Setzen des Fahrtrichtungsanzeigers als Beginn des Spurwechselmanövers und eine Übermittlung der Spurwechseldaten an die zentrale Rechnereinheit wird ausgelöst. Auch die Einleitung des Spurwechselmanövers des jeweiligen automatisiert fahrenden weiteren Fahrzeuges wird anhand des Setzens des Fahrtrichtungsanzeigers erkannt.

Dazu wird in einer weiteren möglichen Ausführung eine momentane Position des Fahrzeuges und des jeweiligen weiteren Fahrzeuges zum Zeitpunkt des Setzens des Fahrtrichtungsanzeigers erfasst und an die zentrale Rechnereinheit übermittelt. Diese momentane Position und der Zeitpunkt gelten dann als ermittelte räumlich-zeitliche Position der Einleitung des Spurwechselmanövers des automatisiert fahrenden Fahrzeuges.

Die Verkehrsdaten werden in einer möglichen Ausbildung des Verfahrens mittels eines Verkehrsdienstes und/oder eines Navigationsdienstes, insbesondere fortlaufend, zumindest in regelmäßigen zeitlichen Abständen, an die zentrale Rechnereinheit übermittelt. Somit liegen der zentralen Rechnereinheit stets verhältnismäßig aktuelle Verkehrsdaten vor, die zur Ermittlung der Position, an welcher ein Spurwechselmanöver zur Nutzung einer nächsten Ausfahrt durchgeführt werden kann, genutzt werden.

Des Weiteren werden in einer Weiterbildung des Verfahrens bei der Ermittlung, ob eine Durchführung des automatisierten Spurwechselmanövers des Fahrzeuges an einer bestimmten Position bei einem momentanen Verkehrsaufkommen möglich ist,
- Wetterbedingungen in einer Fahrzeugumgebung,
- Sichtbedingungen in der Fahrzeugumgebung,
- Sperrungen in der Fahrzeugumgebung und/oder
- dynamische Verkehrsinformationen berücksichtig. Somit wird die bestimmte Position in Abhängigkeit von Umgebungsbedingungen des Fahrzeuges angepasst, um ein sicheres und komfortables Spurwechselmanöver durchführen zu können.

Ausführungsbeispiele der Erfindung werden im Folgenden anhand einer Zeichnung näher erläutert.

Dabei zeigt die:

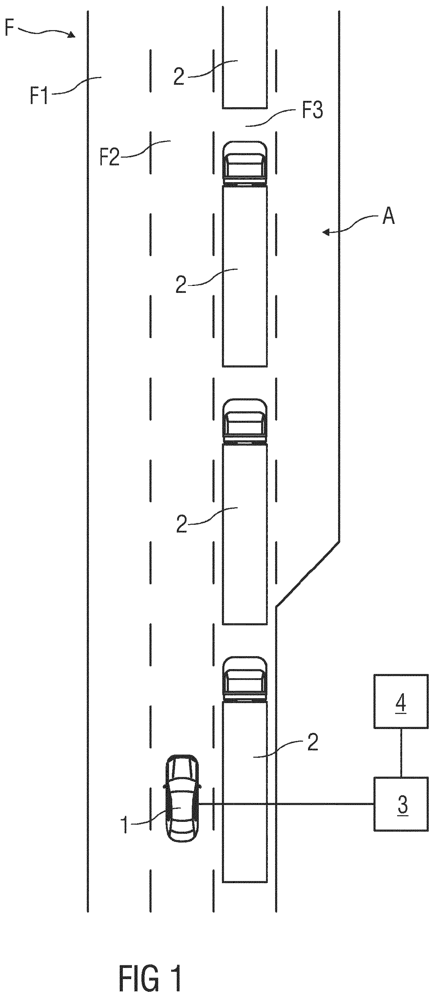

- Fig. 1: schematisch einen Fahrbahnabschnitt einer Autobahn im Bereich einer Ausfahrt.

Die einzige Figur zeigt eine Draufsicht auf einen Fahrbahnabschnitt F einer Autobahn im Bereich einer Ausfahrt A.

Der Fahrbahnabschnitt F umfasst eine innere Fahrspur F1, eine mittlere Fahrspur F2 und eine äußere Fahrspur F3, welche bei geltendem Rechtsverkehrs eine rechte Fahrspur und bei geltendem Linksverkehr eine linke Fahrspur ist.

Ein Fahrzeug 1, welches im automatisierten Fahrbetrieb, insbesondere im autonomen Fahrbetrieb, fährt, befindet sich auf der mittleren Fahrspur F2, wohingegen auf der äußeren Fahrspur F3 eine Kolonne von Lastkraftwagen 2 fährt.

Eine solche Kolonne vergleichsweise dicht hintereinanderfahrender Lastkraftwagen 2 sowie ein vergleichsweise hohes Verkehrsaufkommen, beispielsweise im Feierabendverkehr und/oder in Metropolregionen, schränken die Möglichkeit zur Durchführung eines Spurwechselmanövers des Fahrzeuges 1 von der mittleren Fahrspur F2 auf die äußere Fahrspur F3 oftmals ein, so dass das Fahrzeug 1 unter Umständen an dieser Ausfahrt A nicht von der Autobahn abfahren kann. Insbesondere ist ein Spurwechselmanöver mit vorliegender Situation an einer Ausfahrt A mit relativ starker Steigung kaum bis gar nicht möglich.

Ein im automatisierten Fahrbetrieb fahrendes Fahrzeug 1 erfordert zur Durchführung eines Spurwechselmanövers eine ausreichend große Zeitlücke, um das Spurwechselmanöver verhältnismäßig sicher und komfortabel durchzuführen. Eine ausreichend große Zeitlücke ist aufgrund solcher Kolonnen mit dicht hintereinanderfahrenden Lastkraftwagen 2 nicht vorhanden.

Um dem automatisiert fahrenden Fahrzeug 1 auf einer Autobahn ein verhältnismäßig sicheres und komfortables Spurwechselmanöver zu ermöglichen, insbesondere um von der Autobahn abzufahren, ist im Folgenden ein Verfahren zur Lösung beschrieben.

Das automatisiert fahrende Fahrzeug 1 sowie nicht näher dargestellte weitere Fahrzeuge gehören einer gemeinsamen Fahrzeugflotte an, beispielsweise eines Fahrzeugherstellers, und sind datentechnisch mit einer zentralen Rechnereinheit 3 gekoppelt.

Das Fahrzeug 1 sowie die weiteren Fahrzeuge senden in regelmäßig zeitlichen Abständen ihre jeweilige momentane Position, einschließlich ihrer momentan befahrenen Fahrspur F1 bis F3 an die zentrale Rechnereinheit 3.

Weiterhin ist die zentrale Rechnereinheit 3 mit einem Navigationsdienst 4 datentechnisch gekoppelt, wobei die zentrale Rechnereinheit 3 alternativ oder zusätzlich auch mit einem Verkehrsdienst verbunden sein kann. Die zentrale Rechnereinheit 3 empfängt dabei Verkehrsdaten, die ein jeweiliges lokales Verkehrsaufkommen, beispielsweise für den Fahrbahnabschnitt F, repräsentieren.

Das Verfahren sieht vor, dass anhand einer räumlich-zeitlichen Untersuchung von Spurwechselmanövern mit der zentralen Rechnereinheit 3 vernetzten, automatisiert fahrenden weiteren Fahrzeugen an Ausfahrten A auf Autobahnen das Risiko einer verpassten Ausfahrt erheblich verringert werden kann, wobei die Sicherheit und ein Fahrkomfort bei Durchführung des Spurwechselmanövers erhöht werden können. Insbesondere sieht das Verfahren vor, dass anhand vorliegender Spurwechseldaten und Verkehrsdaten eine räumlich-zeitliche Position für ein Spurwechselmanöver des automatisiert fahrenden Fahrzeuges 1 dynamisch ermittelt werden kann. Dabei enthalten die Spurwechseldaten der weiteren Fahrzeuge Spurwechselortsinformationen und Spurwechselerfolgsinformationen.

Für ein jeweiliges automatisiert fahrendes Fahrzeug 1 kann das Verlassen der Autobahn über eine Ausfahrt A beispielsweise durch ein vergleichsweise frühzeitiges Einscheren des Fahrzeuges 1 auf die äußere Fahrspur F3 realisiert werden. Solche frühzeitigen Positionen zur Einleitung eines Spurwechselmanövers, z. B. von der mittleren Fahrspur F2 auf die äußere Fahrspur F3, können anhand von Spurwechseldaten, welche automatisiert fahrende weitere Fahrzeuge an die zentrale Rechnereinheit 3 übermitteln, erfasst werden. Insbesondere werden hierzu erfolgreich durchgeführte Spurwechselmanöver berücksichtigt, wobei die weiteren Fahrzeuge die Autobahn über die Ausfahrt A ohne Fahrereingriff verlassen haben.

Darüber hinaus kann anhand von übermittelten Daten einer Fahrzeugflotte die Position zur Einleitung eines automatisiert durchgeführten Spurwechselmanövers ermittelt werden, an welcher ein Insasse des Fahrzeuges 1, d. h. ein Fahrer, üblicherweise auf die äußere Fahrspur F3 wechselt, um die Ausfahrt A zu nutzen.

Aufgrund technischer Randbedingungen eines automatisiert fahrenden Fahrzeuges 1 kann die Position zur Einleitung des Spurwechselmanövers auch in einer parametrisierbaren größeren Entfernung, z. B. 300 m zu der Ausfahrt A, vorgegeben werden.

Zur Durchführung des Verfahrens liegt der zentralen Rechnereinheit 3 ein Zielort des automatisiert fahrenden Fahrzeuges 1 vor, so dass bekannt ist, an welcher das Fahrzeug 1 von der Autobahn abfahren muss. Der zentralen Rechnereinheit 3 liegen darüber hinaus, wie oben beschrieben, Verkehrsdaten vor, die ein Verkehrsaufkommen im Verkehrsnetz und somit auch auf dem Fahrbahnabschnitt F repräsentieren.

Darüber hinaus empfängt die zentrale Rechnereinheit 3 von den automatisiert fahrenden weiteren Fahrzeugen der Fahrzeugflotte Spurwechseldaten über geplante und erfolgte automatisierte Spurwechselmanöver. Ein Beginn eines jeweiligen Spurwechselmanövers wird insbesondere anhand eines Setzens eines Fahrtrichtungsanzeigers des jeweiligen weiteren Fahrzeuges erkannt. Insbesondere wird ein Ort, an welchem das Spurwechselmanöver von dem automatisiert fahrenden weiteren Fahrzeug eingeleitet wird, als Spurwechselortsinformation mittels der Spurwechseldaten an die zentrale Rechnereinheit 3 übermittelt. Mittels Setzen des Fahrtrichtungsanzeigers wird Verkehrsteilnehmern in einer Umgebung des jeweiligen automatisiert fahrenden weiteren Fahrzeuges eine Absicht zur Durchführung eines Spurwechselmanövers angezeigt.

Ein erfolgreich durchgeführtes Spurwechselmanöver eines weiteren Fahrzeuges wird von diesem im Bereich der Ausfahrt A, d. h. auf Höhe der Ausfahrt A, jeweils als Spurwechselerfolgsinformation an die zentrale Rechnereinheit 3 übermittelt. Dabei sind die Spurwechselerfolgsinformationen Bestandteil der Spurwechseldaten.

Anhand der vorliegenden Verkehrsdaten und Spurwechseldaten der weiteren Fahrzeuge wird dann eine Wahrscheinlichkeit ermittelt, dass eine Durchführung eines automatisierten Spurwechselmanövers des Fahrzeuges an einer bestimmten Position, beispielsweise in einer vorgegebenen Entfernung zu der Ausfahrt A, möglich ist. D. h., dass anhand der zeitlich-räumlichen Verteilung der erfolgreich durchgeführten Spurwechselmanöver die satellitengestützt ermittelte Position für die Einleitung des Spurwechselmanövers des Fahrzeuges 1 bestimmt wird. An dieser Position kann das Spurwechselmanöver mit einer parametrisierbaren Wahrscheinlichkeit vor einer Ausfahrt A der Autobahn erfolgreich durchgeführt werden.

Positionen, an denen ein nicht erfolgreich durchgeführtes Spurwechselmanöver eingeleitet wurde, kann zusätzlich zur Bestimmung der Position für zukünftige Spurwechselmanöver verwendet werden, beispielsweise indem das Spurwechselmanöver 50 m früher eingeleitet wird. Dieser Ansatz ist insbesondere hilfreich, wenn bisher noch keine nutzbaren Spurwechselerfolgsinformationen vorliegen.

In einer alternativen Ausführung kann aus Daten einer Fahrzeugflotte an Ausfahrten A von Autobahnen eine wahrscheinlichste Einscherposition auf die äußere Fahrspur F3 ermittelt werden und diese Einscherposition dann für automatisiert fahrende Fahrzeuge 1 um eine parametrisierbare Entfernung zu der Ausfahrt, beispielsweise um 300 m, erhöht werden.

In einer möglichen Ausführung des Verfahrens kann die Parametrisierung der Wahrscheinlichkeit und der Einscherposition in Abhängigkeit von dem aktuellen Verkehrsaufkommen erfolgen. So ist bei einem vergleichsweise sehr hohen Verkehrsaufkommen ein zeitlich früher eingeleitetes Spurwechselmanöver sinnvoll. Eine solche Festlegung kann z. B. verkehrsphasenabhängig, insbesondere nach der 3-Phasen-Verkehrstheorie, erfolgen. Beispielsweise erfolgt die Einleitung des Spurwechselmanövers bei freiem Verkehr z. B. 200 m vor der Ausfahrt A, bei synchronisiertem Verkehr wegen einer erhöhten Verkehrsdichte z. B. 600 m vor der Ausfahrt A und bei einem breiten Stau als Verkehrsphase z. B. 400 m vor der Ausfahrt A, da hier zufällig immer mal wieder größere Zeitlücken zu verzeichnen sind.

Darüber hinaus können weitere Parameter, wie beispielsweise aktuelle Wetterbedingungen, Sichtbedingungen, Sperrungen auf Nachbarspuren und/oder dynamische Verkehrsinformationen bei der Ermittlung der Position zur Einleitung eines Spurwechselmanövers, um gefahrlos und komfortabel von der Autobahn abzufahren, berücksichtigt werden.

Die Anwendung des Verfahrens ist insbesondere für Fahrzeuge 1 einer Fahrzeugflotte geeignet, wobei Informationen zur Durchführung eines Spurwechselmanövers auf einer Autobahn, um von dieser abzufahren, auch anderen Fahrzeugflotten, gegebenenfalls entgeltlich, zur Verfügung gestellt werden können.

## Patentansprüche

1. Verfahren zur Planung eines Spurwechselmanövers von einer Fahrspur (F1, F2) auf eine äußere Fahrspur (F3) zur Vorbereitung auf ein bevorstehendes Abfahren von einem mehrspurigen Fahrbahnabschnitt (F) für ein automatisiert fahrendes Fahrzeug (1), wobei das Fahrzeug (1) datentechnisch mit einer zentralen Rechnereinheit (3) gekoppelt oder koppelbar ist, wobei
- mittels der zentralen Rechnereinheit (3) ein lokales Verkehrsaufkommen auf dem mehrspurigen Fahrbahnabschnitt (F) repräsentierende Verkehrsdaten empfangen werden,
- mittels der zentralen Rechnereinheit (3) von automatisiert fahrenden weiteren Fahrzeugen einer Fahrzeugflotte Spurwechseldaten über geplante und erfolgte automatisierte Spurwechselmanöver empfangen werden
**dadurch gekennzeichnet, dass**
- mittels der zentralen Rechnereinheit (3) anhand empfangener Verkehrsdaten und empfangener Spurwechseldaten eine Wahrscheinlichkeit ermittelt wird, dass eine Durchführung eines automatisierten Spurwechselmanövers des Fahrzeuges (1) an einer bestimmten Position bei einem momentanen Verkehrsaufkommen möglich ist, wobei die von den automatisiert fahrenden weiteren Fahrzeugen der Fahrzeugflotte an die zentrale Rechnereinheit (3) übermittelten Spurwechseldaten Spurwechselortsinformationen und Spurwechselerfolgsinformationen enthalten, wobei mittels der Spurwechselortsinformationen ein Ort angegeben wird, an welchem das Spurwechselmanöver des automatisiert fahrenden weiteren Fahrzeuges der Fahrzeugflotte eingeleitet wurde und mittels der Spurwechselerfolgsinformationen angegeben wird, ob das Spurwechselmanöver des jeweiligen automatisiert fahrenden weiteren Fahrzeuges der Fahrzeugflotte erfolgreich durchgeführt wurde oder vorzeitig abgebrochen werden musste.

2. Verfahren nach Anspruch 1,
**dadurch gekennzeichnet, dass** ein Einleiten eines Spurwechselmanövers anhand eines Setzens eines Fahrtrichtungsanzeigers des automatisiert fahrenden Fahrzeuges (1) erkannt wird.

3. Verfahren nach Anspruch 2,
**dadurch gekennzeichnet, dass** eine momentane Position des automatisiert fahrenden Fahrzeuges (1) zum Zeitpunkt des Setzens des Fahrtrichtungsanzeigers erfasst und an die zentrale Rechnereinheit (3) übermittelt wird.

4. Verfahren nach einem der vorhergehenden Ansprüche,
**dadurch gekennzeichnet, dass** die Verkehrsdaten mittels eines Verkehrsdienstes und/oder eines Navigationsdienstes (4) an die zentrale Rechnereinheit (3) übermittelt werden.

5. Verfahren nach einem der vorhergehenden Ansprüche,
**dadurch gekennzeichnet, dass** bei der Ermittlung, ob eine Durchführung des automatisierten Spurwechselmanövers des Fahrzeuges (1) an einer bestimmten Position bei einem momentanen Verkehrsaufkommen möglich ist,
- Wetterbedingungen in einer Fahrzeugumgebung,
- Sichtbedingungen in der Fahrzeugumgebung,
- Sperrungen in der Fahrzeugumgebung und/oder
- dynamische Verkehrsinformationen berücksichtig werden.

## Claims

1. Method for planning a lane change maneuver from one lane (F1, F2) to an outer lane (F3) in preparation for an upcoming exit from a multi-lane roadway portion (F) for an automated vehicle (1), wherein the vehicle (1) is or can be coupled to a central computing unit (3) via data technology, wherein
- by means of the central computing unit (3), traffic data representing local traffic volume on the multi-lane roadway portion (F) are received,
- by means of the central computing unit (3) of additional automated vehicles in a vehicle fleet, lane change data about planned and completed automated lane change maneuvers can be received,
**characterized in that**
- by means of the central computing unit (3), a probability is determined based on received traffic data and received lane change data, as to whether an automated lane change maneuver of the vehicle (1) is possible at a specific position given the current traffic volume, wherein the lane change data transmitted from the additional automated vehicles in the vehicle fleet to the central computing unit (3) contain lane change location information and lane change success information, wherein the lane change location information indicates a location at which the lane change maneuver of the additional automated vehicle in the vehicle fleet was initiated, and
the lane change success information indicates whether the lane change maneuver of the relevant additional automated vehicle in the vehicle fleet was carried out successfully or had to be aborted prematurely.

2. Method according to claim 1,
**characterized in that** an initiation of a lane change maneuver is detected based on an activation of a direction indicator of the automated vehicle (1).

3. Method according to claim 2,
**characterized in that** a current position of the automated vehicle (1) at the time of the activation of the direction indicator is recorded and transmitted to the central computing unit (3).

4. Method according to any of the preceding claims,
**characterized in that** the traffic data are transmitted to the central computing unit (3) by means of a traffic service and/or a navigation service (4).

5. Method according to any of the preceding claims,
**characterized in that** in determining whether it is possible to carry out the automated lane change maneuver of the vehicle (1) at a specific position given the current traffic volume, the following is taken into account:
- weather conditions in a vehicle environment,
- visibility conditions in the vehicle environment,
- road closures in the vehicle environment, and/or
- dynamic traffic information.

## Revendications

1. Procédé permettant la planification d'une manœuvre de changement de voie, d'une voie de circulation (F1, F2) vers une voie de circulation extérieure (F3) pour se préparer à une sortie imminente d'un tronçon de chaussée (F) à plusieurs voies pour un véhicule (1) à conduite automatisée, dans lequel le véhicule (1) est couplé ou peut être couplé selon la technique des données à une unité informatique (3) centrale, dans lequel
- des données de trafic représentant une congestion routière locale sur le tronçon de chaussée (F) à plusieurs voies sont reçues par le biais de l'unité informatique (3) centrale,
- des données de changement de voie provenant d'autres véhicules, à conduite automatisée, d'une flotte de véhicules sont reçues par le biais de l'unité informatique (3) centrale, lesquelles données concernent des manœuvres de changement de voie automatisées planifiées et réussies
**caractérisé en ce que**
- l'unité informatique (3) centrale détermine, à l'aide des données de circulation reçues et des données de changement de voie reçues, une probabilité qu'une réalisation d'une manœuvre automatisée de changement de voie du véhicule (1) à une position donnée soit possible lors d'une congestion routière momentanée, dans lequel les données de changement de voie transmises à l'unité informatique (3) centrale par les autres véhicules, à conduite automatisée, de la flotte de véhicules contiennent des informations sur le lieu du changement de voie et des informations sur la réussite du changement de voie, dans lequel les informations sur le lieu du changement de voie indiquent un lieu où la manœuvre de changement de voie de l'autre véhicule à conduite automatisée de la flotte de véhicules a été initiée et
les informations sur la réussite du changement de voie indiquent si la manœuvre de changement de voie de l'autre véhicule respectif, à conduite automatisée, de la flotte de véhicules, a été réalisée avec succès ou si elle a dû être interrompue prématurément.

2. Procédé selon la revendication 1,
**caractérisé en ce que** l'initiation d'une manœuvre de changement de voie est identifiée à l'aide d'une activation d'un indicateur de direction du véhicule (1) à conduite automatisée.

3. Procédé selon la revendication 2,
**caractérisé en ce qu'**une position momentanée du véhicule (1) à conduite automatisée est détectée au moment de l'activation de l'indicateur de direction et transmise à l'unité informatique (3) centrale.

4. Procédé selon l'une des revendications précédentes,
**caractérisé en ce que** les données de circulation sont transmises à l'unité informatique (3) centrale par le biais d'un service de trafic et/ou d'un service de navigation (4).

5. Procédé selon l'une des revendications précédentes,
**caractérisé en ce que**, pour déterminer s'il est possible de réaliser la manœuvre automatisée de changement de voie du véhicule (1) à une position donnée, lors d'une congestion routière momentanée,
- des conditions météorologiques dans un environnement du véhicule,
- des conditions de visibilité dans l'environnement du véhicule,
- des fermetures dans l'environnement du véhicule et/ou
- des informations dynamiques sur le trafic sont prises en compte.
